Europäisches Patentamt

European Patent Office

Office européen des brevets

(11) Veröffentlichungsnummer: **0 071 043**
**A2**

(12) # EUROPÄISCHE PATENTANMELDUNG

(21) Anmeldenummer: **82106003.5**

(22) Anmeldetag: **05.07.82**

(51) Int. Cl.³: **B 23 P 1/08**

(30) Priorität: **24.07.81 DE 3129265**

(43) Veröffentlichungstag der Anmeldung:
**09.02.83 Patentblatt 83/6**

(84) Benannte Vertragsstaaten:
**AT BE CH FR GB IT LI LU NL SE**

(71) Anmelder: **Friedrich Deckel Aktiengesellschaft**
**Plinganserstrasse 150**
**D-8000 München 70(DE)**

(72) Erfinder: **Seerieder, Karl, Ing. grad. Karl**
**Ahornstrasse 4a**
**D-8038 Gröbenzell(DE)**

(54) **Generator für eine Elektro-Erosionsmaschine.**

(57) Generator für eine Elektro-Erosionsmaschine, bei welchem die von einer Gleichspannungsquelle pulsierend abgegebene elektrische Leistung in der Primärseite eines Sperrwandlers gespeichert und über die Sekundärseite pulsierend abgegeben wird. Eine Strombegrenzung mittels eines verlustbehafteten Widerstandes ist nicht erforderlich. Die Vorionisierung der Funkenstrecke wird durch eine gesonderte Zündspannungsquelle hoher Spannung und geringer Leistung bewerkstelligt.

FIG.4

Croydon Printing Company Ltd.

## Generator für eine Elektro-Erosionsmaschine

Die Erfindung betrifft einen Generator der im Oberbegriff des Anspruchs 1 genannten Art.

Die meisten modernen Generatoren arbeiten nach dem Prinzip, nach welchem die Funkenstrecke, d. h. also der Arbeitsspalt, von einer Gleichspannungsquelle über eine oder mehrere steuerbare Leistungsstufen versorgt wird. Dabei ist im allgemeinen der Aufbau derart, daß zwischen der Leistungsstufe und der Funkenstrecke ein Widerstand angeordnet ist, welcher nach der Zündung des Funkens, welche bei relativ hoher Zündspannung erfolgt, den Arbeitsstrom auf einen zulässigen, technologisch günstigen Wert begrenzt. Dieser Widerstand bebeutet gleichzeitig eine bisher unvermeidbare Verlustleistung, welche den Wirkungsgrad des Generators erheblich verschlechtert.

Ein weiterer Nachteil wird darin gesehen, daß sich bei den bekannten Anordnungen der gattungsgemäßen Art relativ kleine Spannungsschwankungen der Leistungsstufe, die unvermeidbar sind, als relativ große Stromschwankungen am Arbeitsspalt auswirken, wie sich leicht zeigen läßt. Schwankt beispielsweise die Nennspannung von 60 V an der Leistungsstufe um $\pm$ 10 % und ist der Spannungsabfall am Vorschaltwiderstand etwa 40 V, so ergibt sich am Arbeitsspalt eine Stromschwankung von $\pm$ 15 %, was für das Arbeitsergebnis sehr nachteilig ist.

Es ist die Aufgabe der vorliegenden Erfindung, eine Einrichtung der gattungsgemäßen Art zu schaffen, welche den bekannten Einrichtungen gegenüber einen besseren Wirkungsgrad aufweist und bei der der Strom am Arbeitsspalt besser zu bestimmen und genauer einzuhalten ist.

Diese Aufgabe ist erfindungsgemäß durch die im Kennzeichen des Anspruchs 1 genannten Merkmale gelöst.

Die Versorgung des Arbeitsspaltes mit elektrischer Energie erfolgt in zwei Schritten: im ersten Schritt, der Speicherzeit $t_s$, wird elektrische Energie im Sperrwandler gespeichert. Im zweiten Schritt, der Pulszeit $t_p$, fließt diese gespeicherte Energie vom Sperrwandler zum Erodierspalt, wo sie ihre Erodierarbeit leistet. An diese Zeit schließt sich in üblicher Weise eine Pausenzeit an, in der der eigentliche Abtragvorgang stattfindet.

Die erfindungsgemäße Anordnung enthält keinen strombegrenzenden Widerstand mehr, so daß die damit verbundenen Verluste nicht mehr auftreten. Der Arbeitsstrom wird im wesentlichen außer von der Spannung der Leistungstufe von der Speicherzeit $t_s$ bestimmt, die sehr exakt steuerbar ist, so daß auch der Arbeitsstrom sehr genau eingehalten werden kann.

Für alle herkömmlichen Erodierverfahren der gattungsgemäßen Art ist kennzeichnend, daß während der sogenannten Pulszeit die Spannung am Arbeitsspalt zunächst auf einen höheren Wert ansteigt, durch welchen die Funkenstrecke im Arbeitsspalt vorionisiert wird, ohne daß schon ein Funken überspringt. Die dafür erforderliche Zeit wird als Zündverzögerung bezeichnet. Der eigentliche Funkenüberschlag kann bei geringerer Spannung erfolgen.

Um bei der erfindungsgemäßen Einrichtung ebenfalls eine Vorionisierung zu erreichen, ist erfindungsgemäß vorgesehen, daß der Arbeitsspalt zusätzlich an eine Spannungsquelle zur Erzeugung der Zündspannung angeschlossen ist. Diese Spannungsquelle muß eine im Verhältnis zur Sekundärseite des Sperrwandlers höhere Spannung erzeugen, braucht aber nur eine geringe Stromstärke aufzubringen und damit nur eine geringe Leistung. Diese Einrichtung hat damit auf den Wirkungsgrad des Generators keinen wesentlichen Einfluß.

Nach einem weiteren Merkmal der Erfindung ist vorgesehen, daß die Zündspannungsquelle ebenfalls durch die obengenannte Steuereinrichtung ansteuerbar ist, so daß die Vorionisierung in zeitlicher Abstimmung unmittelbar vor der Zündung erfolgt.

Da bei einem Sperrwandler der beschriebenen Art die Leerlaufspannung im Arbeitsspalt nur vom Spaltabstand bestimmt wird, ist erfindungsgemäß auf der Sekundärseite des Sperrwandlers eine Einrichtung zur Begrenzung der in dieser induzierten Spannung vorgesehen.

Ein Ausführungsbeispiel der Erfindung ist in der Zeichnung dargestellt und im folgenden näher beschrieben. Es zeigen:

Fig. 1 den Spannungsverlauf über der Zeit bei einem herkömmlichen Generator;

Fig. 2 den Stromverlauf über der Zeit bei/einem herkömmlichen Generator;

Fig. 3 den Stromverlauf über der Zeit bei einem erfindungsgemäßen Generator;

Fig. 4 ein schematisches Schaltbild eines erfindungsgemäßen Generators.

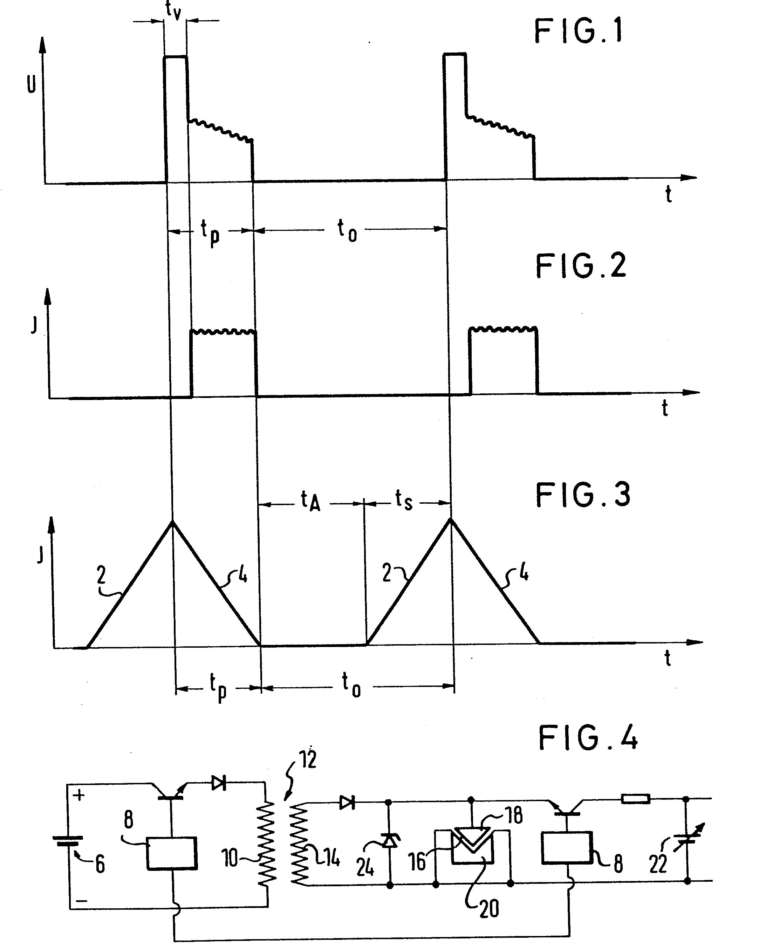

Wie Fig. 1 erkennen läßt, steigt bei herkömmlichen Generatoren die Spannung U im Arbeitsspalt zunächst auf einen für eine Vorionisierung ausreichend hohen Wert an. Wie Fig. 2 zeigt, fließt während der Zündverzögerungszeit $t_v$ noch kein Strom J. Im Augenblick der Zündung beginnt der Strom J zu fließen; er wird durch den weiter vorne beschriebenen Vorschaltwiderstand auf einen technologisch sinnvollen Wert begrenzt. Die Widerstandsleistung ist eine Verlustleistung, die den Wirkungsgrad des Generators auf beispielsweise 40 - 50 % begrenzt. An die gesamte Pulszeit $t_p$ schließt sich die Pausenzeit $t_o$ an, in der keine Spannung am Arbeitsspalt anliegt.

Bei Verwendung des erfindungsgemäßen Generators wird während der Pausenzeit $t_o$, genauer während der Speicherzeit $t_s$, dem Sperrwandler eine elektrische Leistung zugeführt, wobei der Strom etwa den in Fig. 3 dargestellten, mit 2 bezeichneten Verlauf hat. Während eines Teils dieser Zeit wird auch die Zündspannung angelegt, die die Funkenstrecke vorionisiert. Am Ende der Zeit $t_s$ erfolgt die Zündung, so daß während der Pulszeit $t_p$ ein Strom 4 im Arbeitsspalt fließt. Die Zeit $t_o - t_s$ ist als Ausgleichszeit $t_A$ bezeichnet. Diese ist erforderlich, um die für den einwandfreien Abtrag nötige Pausenzeit $t_o$ zu erreichen.

Fig. 4 zeigt eine mit 6 bezeichnete Leistungsstufe, welche, durch eine Steuereinrichtung 8 gesteuert, der Primärseite 10 des Sperrwandlers 12 einen pulsierenden Gleichstrom zuführt (siehe 2 in Fig. 3). In der Sekundärseite 14 wird der Arbeitsstrom (siehe 4 in Fig. 3) zur Versorgung des Arbeitsspaltes bzw. der Funkenstrecke 16 zwischen Elektrode 18 und Werkstück 20 induziert. Eine Zündspannungsquelle 22, die ebenfalls durch die Steuer-

0071043

einrichtung 8 angesteuert wird, dient der Vorionisierung
der Funkenstrecke im Arbeitsspalt.

Parallel zum Erodierspalt 16 ist als Einrichtung 24 zur
Spannungsbegrenzung eine sogenannte Z-Diode angeordnet,
welche die am Erodierspalt anliegende Spannung auf
einen bestimmten Wert begrenzt, indem sie oberhalb dieses Wertes leitend wird.

Patentansprüche:

1. Generator für eine Elektro-Erosionsmaschine, umfassend eine Gleichspannungsquelle, wenigstens eine dieser nachgeschaltete, durch eine Steuereinrichtung ansteuerbare Leistungsstufe sowie eine der Leistungsstufe nachgeordnete, mit dem Werkstück eine Funkenstrecke bildende Elektrode,

dadurch gekennzeichnet,

daß zwischen der Leistungsstufe und der Funkenstrecke (16) ein Sperrwandler (12) angeordnet ist, dessen Primärseite (10) von der Leistungsstufe mit pulsierendem Gleichstrom (2) versorgt wird und dessen Sekundärseite (14) den in dieser induzierten Strom (4) an die Funkenstrecke (16) weitergibt.

2. Generator nach Anspruch 1, dadurch gekennzeichnet, daß die Funkenstrecke (16) zusätzlich an eine Spannungsquelle (22) zur Erzeugung einer Zündspannung angeschlossen ist.

3. Generator nach Anspruch 2, dadurch gekennzeichnet, daß die Zündspannungsquelle (22) eine im Verhältnis zur Sekundärseite (14) des Sperrwandlers (12) hohe Spannung bei geringer Stromstärke erzeugt.

4. Generator nach einem der Ansprüche 2 oder 3, dadurch gekennzeichnet, daß die Zündspannungsquelle (22) ebenfalls durch die Steuereinrichtung (8) ansteuerbar ist.

5. Generator nach einem der Ansprüche 1 bis 4, dadurch gekennzeichnet, daß auf der Sekundärseite (14) des Sperrwandlers (12) eine Einrichtung (24) zur Begrenzung der in dieser induzierten Spannung vorgesehen ist.

0071043

FIG.1

$t_v$

U

$t_p$   $t_o$

FIG.2

J

t

FIG.3

$t_A$   $t_s$

J

2   4   2   4

$t_p$   $t_o$

t

FIG.4

12

6   8   10   14   24   16   20   18   8   22